# EUROPEAN PATENT SPECIFICATION

(11) **EP 1 855 969 B1**
(45) Date of publication and mention of the grant of the patent: **04.01.2012**
(21) Application number: 06732940.9
(22) Date of filing: 09.03.2006
(51) Int. Cl.: B65G 57/06, B65G 59/02

(54) **DEVICE AND METHOD FOR (DE)PALLETIZING PRODUCTS**
VORRICHTUNG UND VERFAHREN ZUR (ENT)PALETTIERUNG VON PRODUKTEN
DISPOSITIF ET PROCEDE POUR (DE)PALLETISER DES PRODUITS

(30) Priority: 09.03.2005 NL 1028494
(43) Date of publication of application: 21.11.2007
(73) Proprietor: Nedpack Patenten B.V., 3846 CE Harderwijk (NL)
(72) Inventor: HANNESSEN, Pieter, Gerrit, NL-3843 JK Harderwijk (NL)
(74) Representative: Land, Addick Adrianus Gosling
(86) International application number: PCT/NL2006/000121
(87) International publication number: WO 2006/096055

(56) References cited:
- EP-A- 0 257 447
- EP-A- 0 893 379
- EP-A- 1 024 098
- DE-A1- 2 401 194
- DE-A1- 3 107 495
- DE-A1- 4 333 381
- DE-A1- 19 511 558
- DE-A1- 19 943 800
- DE-U1- 29 721 203
- FR-A- 2 210 562
- FR-A- 2 696 711
- GB-A- 2 003 818
- NL-C2- 1 010 202
- US-A- 3 749 257
- US-A- 4 898 511
- US-A- 5 524 747
- US-A- 5 683 222
- US-B1- 6 533 533

## Description

The device and method according to the invention are based on the principle of setting down rows instead of complete layers of products on a pallet. Not only is a more compact device hereby obtained, but a space can in addition be arranged between each row of a layer, thereby resulting in a very stable stacking.

According to the present invention rows are set down, this being understood to mean the simultaneous setting down of one or more rows, but not the setting down of a whole layer.

Products are understood to mean, among other things, (cardboard) boxes and trays.

Normally a complete layer is first assembled on a forming platform and then placed on a shovel plate by means of a pusher. The layer is then set down on the pallet by a removing or holding means. The drawback of such a machine is that no spaces can be arranged in the layer, and the products are pulled against each other when the shovel plate is pulled back against the removing means.

By now dividing the layer into rows, and also setting them down per row on the pallet, the machine can be considerably simplified and constructed more compactly. This also results in a cost saving. The forming platform can be given a much smaller form because only one row has to be formed thereon and not a whole layer. The same is the case for the shovel plate, it being possible here to opt to have the shovel plate comprise only one row, or a larger plate can be chosen which can comprise multiple rows. Such a construction can be applied in diverse palletizing machines, for instance in palletizing machines operating in both low and high positions.

There is also a possibility of suspending under the shovel plate an installation which can pick up a pallet. In this way one pallet at a time can be removed from a stack of pallets and set down at the loading position. A pallet magazine which would otherwise be necessary can hereby be dispensed with, this resulting in a further cost saving.

Another possibility is to suspend under the shovel plate an installation which can lay a sheet of cardboard or paper between the layers of products.

This type of machine can also be used to depalletize layers (optionally also per row).

A number of different embodiments will be described hereinbelow of a device for palletizing products, wherein rows, and not a complete layer, of products are placed on a pallet.

In the following description "front" is understood to mean located at the discharge side, and "rear" located at the infeed side of the device.

The term flight-bar is understood to mean a bar which is arranged in transverse direction of the device and functions as a stop for pushing or holding back products. This bar is movable in longitudinal direction of the device in order to be able to take up position at predetermined locations for the purpose of pushing or holding back products. Within the scope of this patent the term flight bar is also specified with the general terms of stop and removing means.

In this patent the term belt shovel is understood to mean a movable frame with a conveyor belt arranged therein. The frame is movable in longitudinal direction of the device and the conveyor belt can be driven in the same longitudinal direction. A very flexible transport means is obtained by displacing the frame separately or simultaneously and driving, optionally simultaneously, the conveyor belt arranged in this frame.

EP-A2-0 257 447 discloses a palletizing device for loading bags on pallets, and comprises the features according to the preamble of independent claims 6 and 7.

The present inventions relates to a method according to independent claims 1 and 2, as well as to a device according to independent claims 6 and 7.

The transport member can be moved between the supply location and the set-down location, and with this movement displaces one or more products situated on the transport member from the supply location to the set-down location. Means are further provided which cause the products and the transport member to move relative to each other, whereby the products can be moved off the transport member for the purpose of setting the products down at the set-down location.

The means for causing relative movement of the transport member and the products comprise a stop which is arranged movably at a higher level than the transport member. The transport member and the stop can move relative to each other, whereby the stop - when situated at a level higher than the transport member but lower than the level of the upper surface of the products - will hold back the products situated on the transport member while the transport member moves out from under the products. In this way a relative movement between the stop and the transport member ensures that the products are set down.

The stop is at least movable at a level higher than an upper surface of the products for moving the stop along above the products. Because the stop can move at a level higher than the upper surface of the products, the stop can be carried above the products - for instance from the side directed toward the supply location in the direction of the side directed toward the discharge location - to the other side of the products. When the stop has passed over the top side of the products the stop is returned to a level which is higher than the transport member but is lower than the upper surface of the products. In this manner the stop functions at this lower level for the purpose of holding back the products when the transport member moves along under the stop. The stop holds back the products, whereby the products slide off the transport member moving thereunder and in this manner are set down at the set-down location. Because the stop holds back the products, the products will form a substantially straight surface on the side of the stop. According to the invention the stop is movable between a first level, which is substantially higher than the level of the upper surface of the products situated on the transport member, and a second level which is substantially higher than the level of the transport member but lower than the level of the upper surface of the products situated on the transport member.

In a preferred embodiment of the invention the stop is substantially a bar. Such an elongate, extended body can take a relatively light form but still has sufficient bending stiffness to function as stop for the products. If desired, the bar can comprise a profile shape which further increases the bending stiffness in the load direction.

In a further preferred embodiment the stop is movable in a peripheral path in a substantially vertical plane via a guide. The stop is movable between two horizontal levels by embodying the stop for peripheral movement in a substantially vertical plane.

In a preferred embodiment the stop can move in two directions, i.e. to the left (counter-clockwise) or to the right (clockwise).

In a further preferred embodiment the transport member and the stop are arranged in a frame for movement relative to each other. By arranging both the transport member and the stop in the same frame, while ensuring that they have a separate drive whereby they are movable relative to each other, the device can suffice with a single frame.

In yet a further preferred embodiment the transport member and the stop are arranged in frames which are individually movable relative to each other. Because the transport member and the stop are accommodated in individual frames, a shorter frame can be used for the stop. By accommodating the stop in a shorter frame and making this frame movable, i.e. it can "co-displace" with the transport member, the construction can be assembled in more compact manner. In this construction the transport member and the stop can move forward and rearward independently of each other.

According to the invention of claim 7 the transport member comprises a shovel plate. An inexpensive but practically effective transport surface is provided by embodying the transport member as a plate. The coefficient of friction of the surface of the plate is preferably sufficiently smooth that on the one hand the products can readily slide on and off it, while on the other it is sufficiently rough to prevent the products sliding off during displacement from the supply location to the set-down location. The actual coefficient of friction is a compromise between these properties.

According to the invention of claim 6 the transport member comprises a belt shovel. Such a belt shovel provides extra flexibility relative to the above described shovel plate. The belt shovel can be displaced integrally and the belt can optionally be driven simultaneously, whereby a very flexible transport member is obtained. When the transport member for instance moves rearward and the belt is simultaneously driven in forward direction at the same speed, the products will not change position relative to the set-down location. The belt shovel does however move out from under the products, whereby the products are set down at the unchanged position. If desired, the use of a stop can be dispensed with in this embodiment.

In yet another preferred embodiment two stops are provided which can preferably be driven separately so that they can be moved independently of each other. Such a device provides more flexibility and can operate more rapidly because the distance over which the stop moves is reduced. This is possible because a first stop is for instance situated substantially on the side directed toward the supply location for the purpose of pushing the products onto the transport member and functioning as stop when rows are set down, wherein the transport member moves along under the stop in the direction of the supply location. This will generally be the case for all rows except the first row. A second stop can be situated substantially close to the set-down location in order to serve as stop for holding back the products when the transport member moves along under the stop, which will generally be the case when the first row is set down at a set-down location.

In another further embodiment the stop located on the discharge side is not movable but is situated at a fixed position corresponding with the front side of the discharge location. Attention is once again drawn here to the definition according to this patent, wherein "front" is understood to mean located at the discharge side, and "rear" located at the infeed side of the device. Because this front stop is not movable, the costs of the machine can be reduced further, while the advantage of the above described embodiment - consisting of the shorter distance the movable stop has to travel - is still retained.

In a further preferred embodiment the transport member is provided with product guides. Product guides in the form of tapering strips will eliminate possible spaces situated between the products in transverse direction when the products are moved through the guides. It is hereby possible to set down the products from the transport member at the set-down location in a substantially continuous row.

In yet another preferred embodiment the transport member is provided on its underside with holding means for picking up an insert sheet or blank from a storage reservoir. By providing the transport member with holding means on its underside the transport member can be displaced to the supply location immediately after placing of an insert sheet or blank at the discharge location for the purpose of pushing a new product or new row of products with the stop onto the transport member. The insert sheets or blanks are for instance laid on a finished layer so that insert sheets or blanks will be situated between the separate layers of products on a pallet. In embodiments where the transport member is not provided on the underside with holding means, the transport member will pick up a separate frame provided with holding means - together with an insert sheet or blank - from the storage reservoir for insert sheets or blanks. A drawback in an embodiment with a separate frame is however that the separate frame must be returned to the storage reservoir after placing of the insert sheet or the blank. This extra step is no longer required in the device according to the preferred embodiment, wherein the transport member is provided on its underside with holding means for picking up an insert sheet or blank from a storage reservoir. It is noted that the terms insert sheet and blank are used interchangeably within the scope of this patent.

In yet another preferred embodiment the holding means comprise vacuum means. Vacuum means such as suction cups are efficient for picking up insert sheets or blanks, wherein the insert sheets or blanks are moreover not damaged.

Exemplary embodiments of the invention are further elucidated in the following description with reference to the drawing, in which:
Fig. 1A-1G show top and side views of the operation of an embodiment wherein the conveyor is a belt shovel with an integrated stop (flight bar);
Fig. 2A-2H show top and side views of the operation of an embodiment wherein the conveyor is a shovel plate with an integrated stop (flight bar);
Fig. 3A-3H show top and side views of the operation of an embodiment wherein the conveyor is a shovel plate with an integrated co-displacing stop (flight bar);
Figure 4 is a prospective view of a device according to the invention wherein the conveyor is a belt shovel;
Figure 5 is a perspective front view (side of the pallet) of a device according to the invention wherein the conveyor is a shovel plate with integrated stop;
Figures 6 and 7 are perspective rear views (supply side) of the device of figure 5;
Figures 8 and 9 are perspective detail views of a frame including driving for a transport member and stop (flight bar);
Figure 10 is a perspective view of a device according to the invention wherein the transport member is a shovel plate;
Figure 11 is a perspective view of an embodiment wherein the transport member is a shovel plate and the stop pushes the products onto the transport member;
Figure 12 is a perspective view of an embodiment wherein the transport member is a shovel plate and the stop is situated on the front side of the products and a row of products is set down at the set-down location;
Figure 13 is a perspective view of an embodiment wherein the transport member is a shovel plate and the stop is situated on the rear side of the products and a row of products is set down at the set-down location;
Figures 14A and 14B show a top and side view of a further preferred embodiment, wherein the transport member is a shovel plate and the stop is arranged in a separately movable frame;
Figures 15A and 15B show a top and side view of a preferred embodiment, wherein the transport member is a belt shovel and a layer of products is moved onto the belt shovel by rotating the belt;
Figures 16A and 16B show a top and side view of a preferred embodiment, wherein the transport member is a belt shovel and a first row of products is set down at the set-down location;
Figures 17A and 17B show a top and side view of a preferred embodiment, wherein the transport member is a belt shovel and the belt shovel moves rearward before a subsequent row is set down so as to thus arrange a space between the row already set down and a new one; and
Figure 18 is a perspective detail view of a further preferred embodiment in which a shovel plate is shown in detail.

### Belt shovel with an integrated flight bar

In this device the flight bar, in contrast to machines known from the prior art, is situated directly above the belt shovel. This has the advantage that a more compact device results which has the same functionality as machines already known.

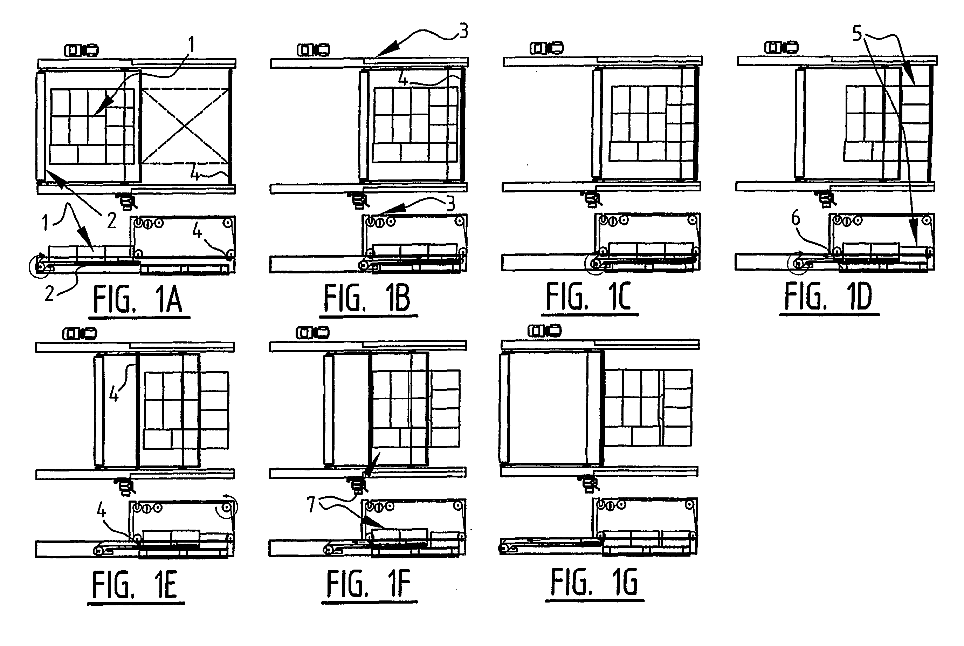

The operation of this device is explained with reference to Figures 1A-1G.

In Figure 1A the layer 1 is transported (without spaces) from the forming platform (not shown) onto belt shovel 2 by causing the rollers of the forming platform and the belt to rotate in forward direction (to the right in the drawing).

In Figure 1B the belt shovel 2 with layer 1 thereon is transported forward in its entirety to a position between frame 3 of flight bar 4. This flight bar 4 is in fact a pusher as well as removing or holding means. Flight bar 4 is formed by a bar mounted between two chains, whereby the layer or rows of products can be pushed away or, conversely, can be held back. A plurality of bars can be situated in one frame 3.

Figure 1C shows that by causing the belt of belt shovel 2 to rotate in forward direction the layer moves against flight bar 4, which functions at that moment as holding means or front stop. The products thus move against flight bar 4 and a straight surface is created on the front side of the layer.

In Figure 1D the whole belt shovel 2 now moves to the rear. The belt rotates in forward direction at the same speed as the whole belt shovel 2 is pulled back. The layer hereby remains pressed against flight bar 4 and the foremost row 5 of products is set down on pallet 6.

Figure 1E shows that belt shovel 2 stops rotating and remains in its position. Flight bar 4 is carried rearward by the chains and functions at that moment as removing means or rear stop.

Belt shovel 2 is transported, without rotating, to the rear until the rearmost row 7 of products contacts flight bar 4, and in this way the space is made in layer 1 (figure 1F). Flight bar 4 also ensures at that moment that a straight surface of products is also created at the rear.

Finally, in Figure 1G belt shovel 2 is now transported further to the rear (still without rotating the belt itself) until the remainder of the products is set down on pallet 6. In this manner spaces can be arranged at any random position in a layer 1 while retaining straight surfaces on the outer side of a loaded pallet.

### Shovel plate with an integrated flight bar

In this embodiment the flight bar is situated above a shovel plate which can contain one or more rows. This has the advantage that a very compact device results which has the same functionality as known devices. This embodiment also makes use of the principle of setting down rows on a pallet instead of complete layers.

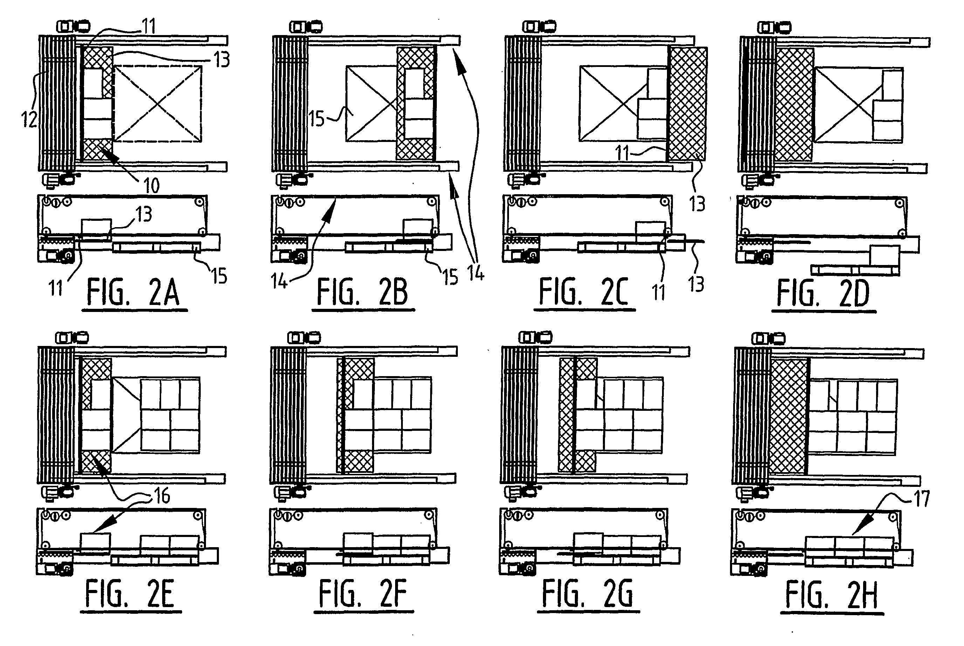

The operation will once again be further elucidated with reference to the accompanying Figures 2A-2H.

In Figure 2A a row 10 is transported by means of a flight bar 11 from a forming platform 12 onto a shovel plate 13. Flight bar 11 thus pushes row 10 onto shovel plate 13, thereby creating a straight surface on the rear side of row 10. Flight bar 11 is in fact a bar mounted between two chains in a frame 14 whereby it can push away or, conversely, hold back the layer. A plurality of bars can be situated in one frame. Shovel plate 13 is accommodated displaceably in the same frame 14.

As shown in Figure 2B, shovel plate 13 with row 10 thereon now moves forward. Flight bar 11 is carried into a position on the front side of a pallet 15 (right-hand side in the drawing), whereby it functions as front stop.

In Figure 2C shovel plate 13 now moves further forward and row 10 is set down on pallet 15. Flight bar 11 then ensures that a straight surface now results on the front side of pallet 15.

Pallet 15 descends and shovel plate 13 and flight bar 11 return to their starting position (Figure 2D). It is conversely also possible to move frame 14 upward while pallet 15 remains stationary to allow the return of shovel plate 13.

Figure 2E shows that pallet 15 moves upward again and, in the same manner as stated in Figure 2A, a subsequent row 16 is now placed on shovel plate 13.

In Figure 2F shovel plate 13 with row 16 thereon now moves forward to a position just behind the previously set-down row 17. Flight bar 11 also moves forward to a position just behind the position where row 16 must be positioned on pallet 15. Flight bar 11 now serves as rear stop.

Shovel plate 13 moves to the rear whereby the products are pulled against flight bar 11 (Figure 2G). In this manner a space can be made in the pattern.

Finally, shovel plate 13 moves further to the rear and the products are set down on pallet 15 (Figure 2H). Because the flight bar now functions as rear stop, a straight surface also results on the rear side of layer 17 on pallet 15.

The steps according to Figures 2D-2H will be repeated in the case layer 17 consists of more than two rows.

### Shovel plate with an integrated co-displacing flight bar

More variants of the shovel plate embodiment are possible. An embodiment is for instance possible with a plate for instance for two or more rows, whereby a greater capacity can be achieved. More products per unit of time can then be stacked.

An embodiment is also possible wherein the frame of the flight bar "co-displaces" with the shovel plate. This means that a shorter frame of the flight bar can be made, whereby the construction becomes even more compact. In this construction the shovel plate and the frame of the flight bar can move forward and rearward independently of each other.

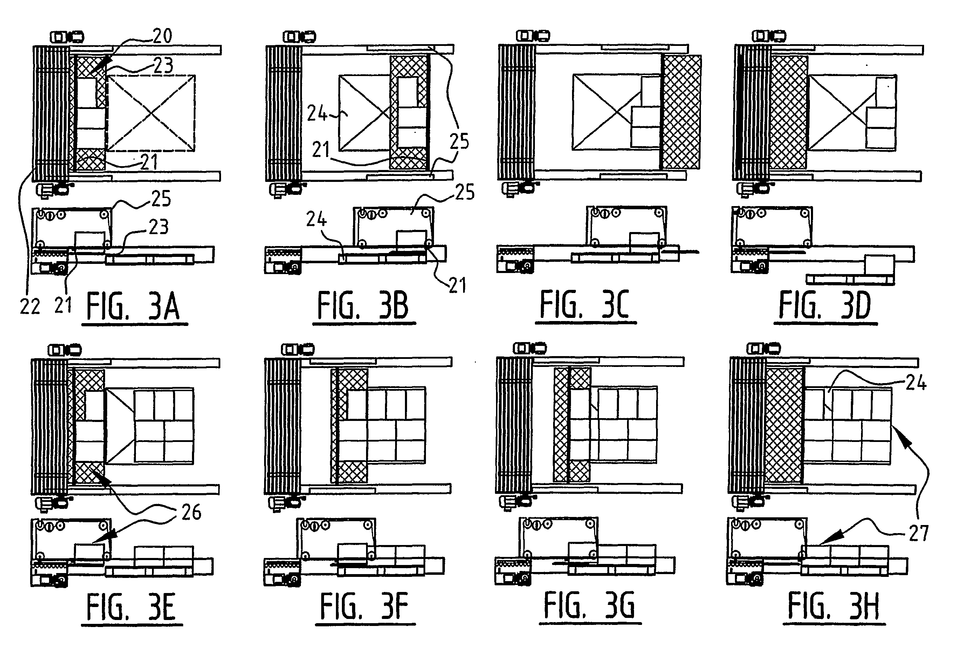

This latter embodiment is shown in Figures 3A-3H. The operation is further elucidated with reference to these figures.

A row 20 is transported by means of a flight bar 21 from a forming platform 22 to a shovel plate 23. Flight bar 21 thus pushes row 20 onto shovel plate 23, whereby a straight surface results on the rear side of row 20 (Figure 3A). This flight bar 21 is in fact a bar mounted between two chains in a frame 25, whereby it can push away or, conversely, hold black products. Frame 25 is arranged movably in horizontal direction between forming platform 22 and the position of pallet 24. A plurality of bars can be situated in one flight bar frame 25.

Shovel plate 23 with row 20 thereon now moves forward. Frame 25 with flight bar 21 is likewise displaced in forward direction. Flight bar 21 moves into a position on the front side of a pallet 24 (right-hand side in the drawings), whereby it functions as front stop (Figure 3B).

In Figure 3C shovel plate 23 now moves further forward and row 20 is set down on pallet 24. Flight bar 21 then ensures that a straight surface is now created on the front side of pallet 24.

Pallet 24 descends and shovel plate 23 and flight bar 21 return to their starting position (Figure 3D).

Pallet 24 moves upward again and in the same manner as stated in Figure 3A a subsequent row 26 is now placed on shovel plate 23 (Figure 3E).

Shovel plate 23 with row 26 thereon now moves forward to a position just behind the row set down earlier. Flight bar 21 also moves forward to a position just behind the position at which the row must be set down on pallet 24. Flight bar 21 now serves as rear stop (Figure 3F).

Shovel plate 23 moves to the rear whereby the products are pulled against flight bar 21. In this way a space can be made in the pattern (Figure 3G).

Shovel plate 23 moves further to the rear and the products are set down on pallet 24. Because flight bar 21 now functions as rear stop, a straight surface is also created on the rear side of layer 27.

The steps according to Figures 3D-3H will be repeated in the case layer 27 consists of more than two rows.

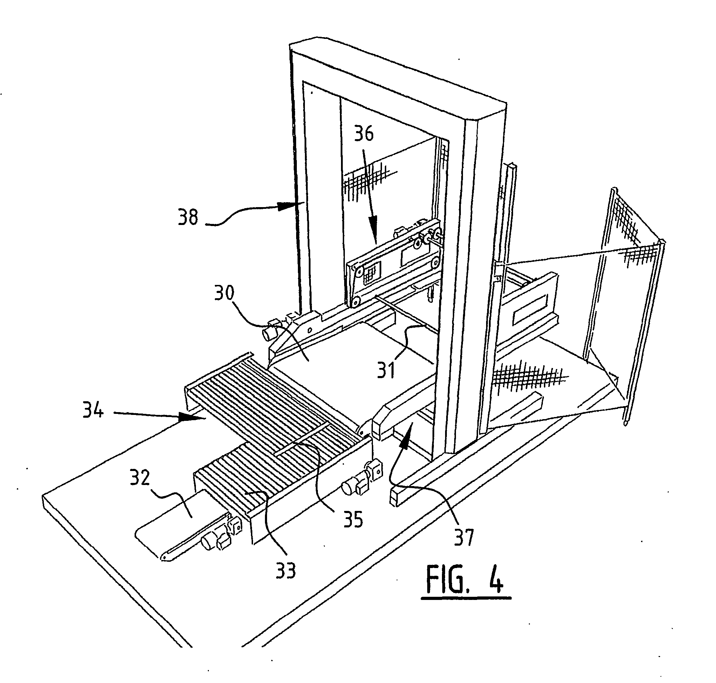

Figure 4 shows a perspective view of a device according to the inventions with belt shovel 30 and flight bar 31. The following components can be seen: feed conveyor 32, roller conveyor 33, forming platform 34 with slider 35, frame 36 with drive for flight bar, frame 37 with drive for belt shovel and vertical frame 38. Frames 36 and 37 are accommodated displaceably in frame 38. A pallet which has to be loaded or unloaded is placed at the position under frame 36 of the flight bar.

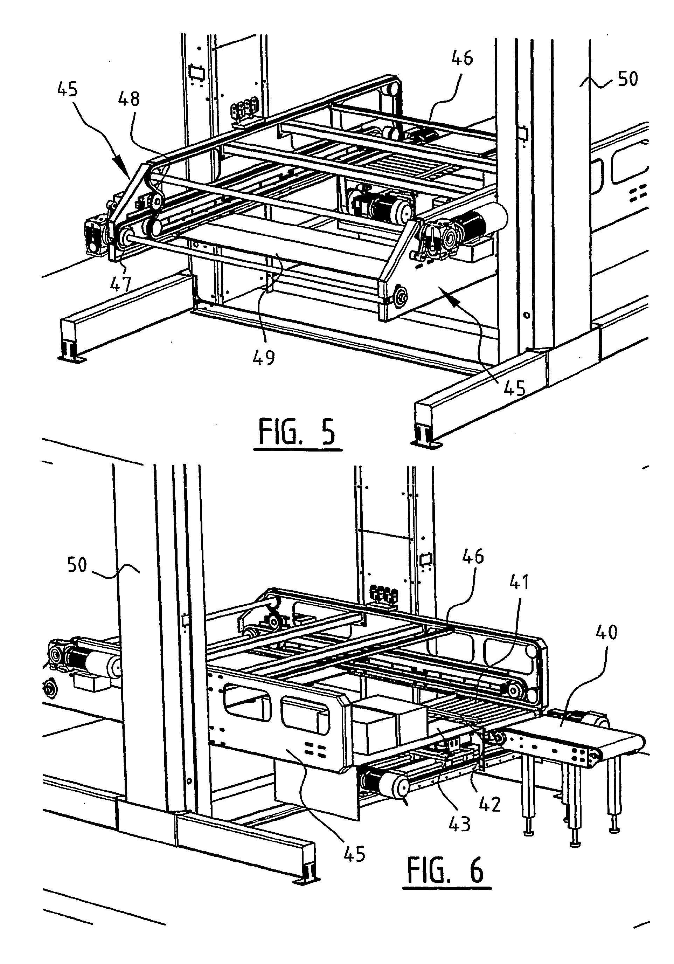

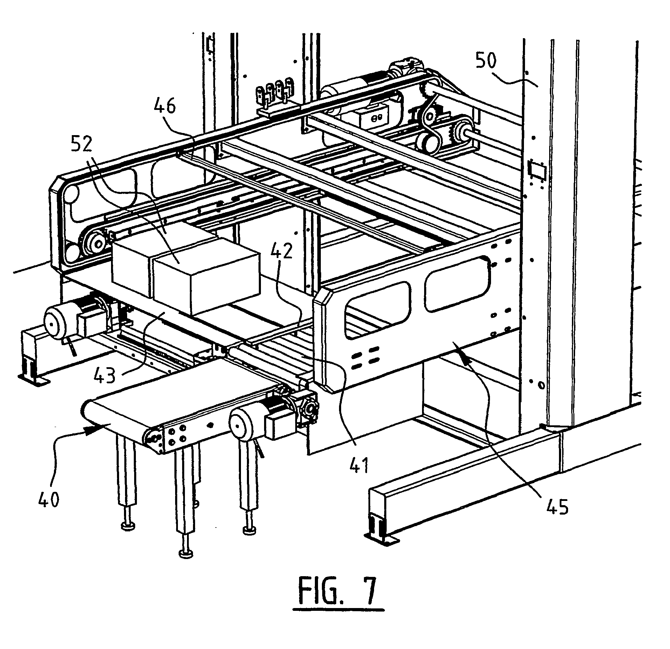

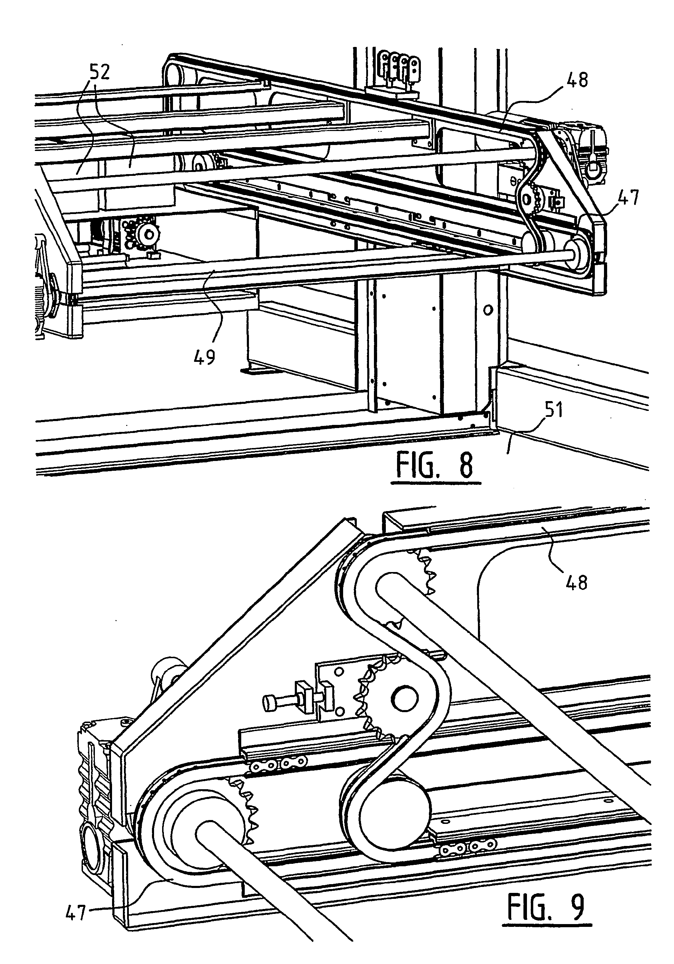

Finally, Figures 5-9 show perspective views of a device according to the invention, wherein a shovel plate with integrated flight bar is applied. Figure 5 is a view of the front side (side of the pallet) of the device. Figures 6 and 7 are views of the rear side or supply side of the device. Figures 8 and 9 show details of a frame including drive for the shovel plate and the flight bar.

Figures 5-9 show a feed conveyor 40. Products are supplied hereover. The products are taken over from feed conveyor 40 onto a roller conveyor 41. A forming platform 43 is located on the left-hand side of roller conveyor 41 (Figure 7). A slider 42 is displaceable transversely of the feed direction in order to slide products from roller conveyor 41 to the forming platform.

Reference numeral 45 designates a frame for flight bar 46. Chains 47,48 are accommodated in the frame. Chain 47 serves to transport shovel plate 49, while chain 48 serves to transport flight bar 46. Two flight bars can also be arranged in frame 45 instead of one. The whole frame 45 with flight bar 46 and shovel plate 49 is accommodated in a vertically disposed frame 50 so as to be displaceable in vertical direction. A pallet for loading or unloading is disposed (optionally on a scissor table) at the position designated with reference numeral 51.

Boxes 52 are pushed by flight bar 46 onto shovel plate 49. The shovel plate is carried to the pallet and the boxes are set down on the pallet using flight bar 46, this as described above with reference to Figures 2A-2H.

The invention is not limited to the shown and described embodiments. According to the invention only rows - and not a complete layers - are set down on a pallet. It is hereby possible to suffice with a cheaper and more compact device. In addition, it is possible in simple manner to arrange spaces in a layer on a pallet. It is finally noted that the embodiment of the belt shovel with integrated flight bar also finds application in the palletizing of complete layers consisting of boxes. This is particularly advantageous in the palletizing of foil packages which cannot and will not slide along each other. A layer of foil packages (or boxes or the like) can be formed in advance (with optionally desired spaces therein) on a forming platform and be transferred onto the belt shovel by driving the forming platform and the belt of the belt shovel, which then sets down the layer onto the pallet in one operation using the flight bar as holding means.

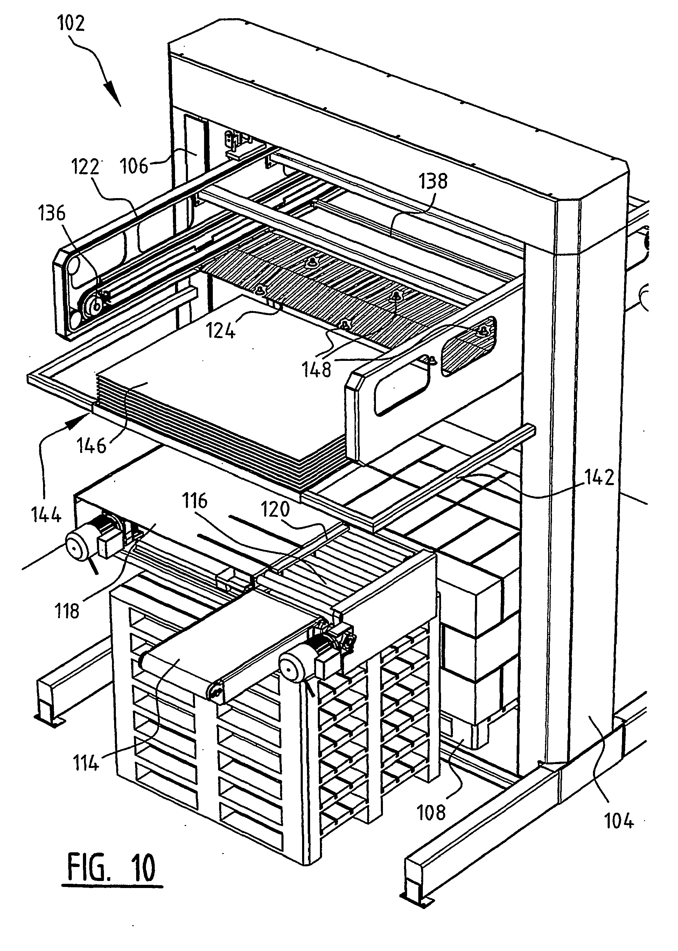

Figure 10 shows a perspective view of a device 102 according to the invention, wherein transport member 124 is a shovel plate 126. Device 102 comprises a frame 104 in which a guide 106 is arranged for guiding a frame 122 of transport member 124 in substantially vertical direction. Further shown in the figure are a feed conveyor 114, a roller conveyor 116 and a forming platform 118. A slider 120 is provided for sliding products from roller conveyor 116 to forming platform 118. Frame 122 is arranged for vertical movement in frame 104 of device 102 via guide 106. Further shown is a pallet 108 on which three layers of products have already been set down. A stop 138 is arranged movably in frame 122. In this exemplary embodiment the frame 136 of stop 138 is the same as frame 122 of transport member 124.

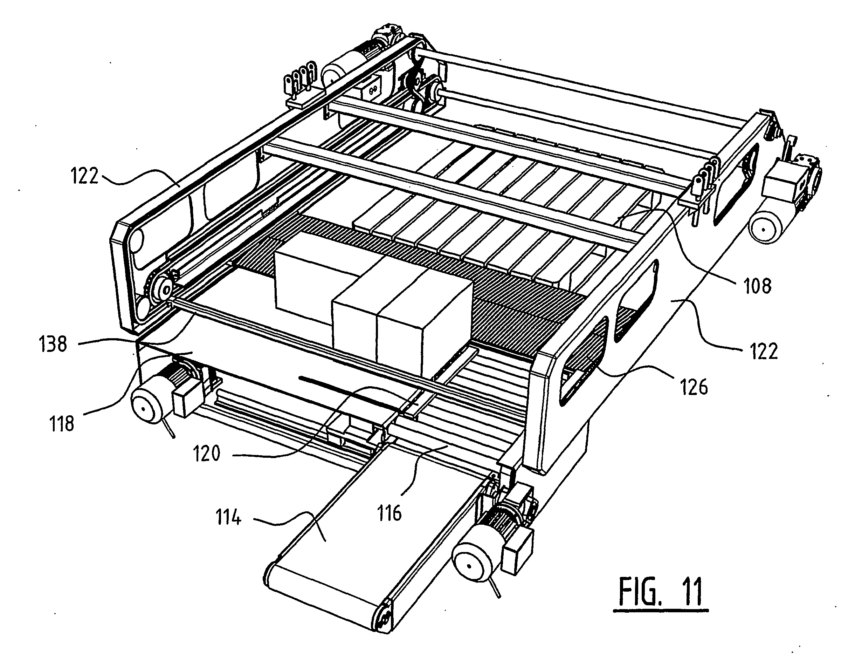

An embodiment of the invention will be illustrated with reference to Figures 11-13, wherein transport member 124 is a shovel plate 126 and stop 138 is arranged movably in frame 122. In this embodiment shovel plate to 126 and stop 138 are arranged in the same frame 122.

Figure 11 shows the situation in which products are pushed from forming platform 118 onto shovel plate 126 by stop 138. The situation shown in Figure 11 is a perspective view of the situation also shown in the top and side view of Figure 2A.

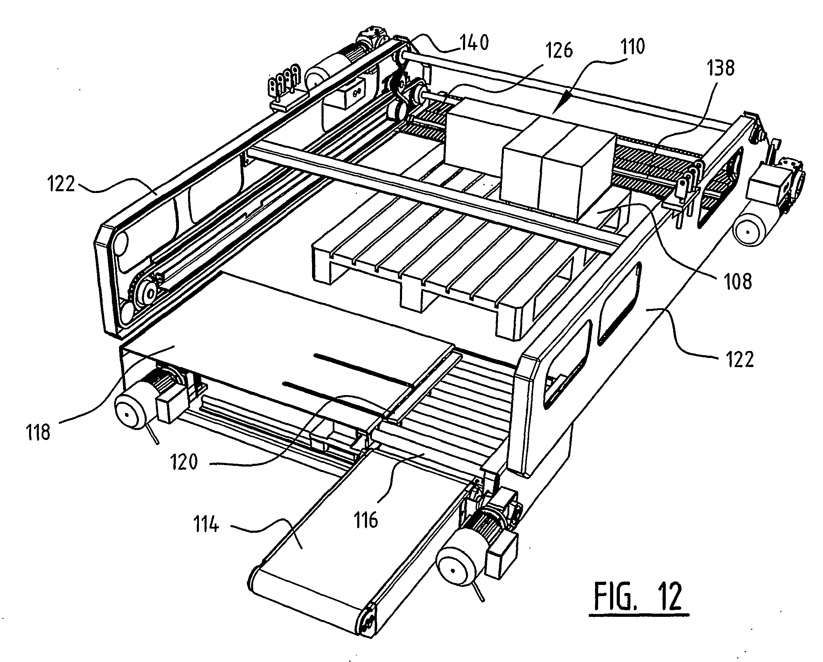

Figure 12 shows a perspective view of the situation corresponding with the top and side view of Figure 2C. In the situation shown in Figure 12 the stop 138 is moved via its drive 142 to the front side - i.e. on the discharge side - of products 110 where stop 138 has held back products 110 while shovel plate 126 has moved out between pallet 108 and products 110 in the direction of the front side. Stop 138 holds back the products at a level lying above the level of shovel plate 126 but below the level of the upper surface of products 110. In order to be able to move stop 138 from the position shown in Figure 11 - wherein stop 138 is situated on the rear side (supply side) of the products - to the position shown in Figure 12 (discharge side) without contacting the products 110, stop 138 will move from the supply side to the discharge side at a level higher than that of the upper surface of products 110. In order to allow stop 138 to move from the rear side (supply side) to the front side (discharge side) without contacting products 110, stop 138 is driven via a drive 140 in the form of a chain or a conveyor belt, wherein drive 140 describes a substantially vertical plane. Drive 140 of stop 138 is arranged in frame 136 of the stop, which in this exemplary embodiment is the same frame as frame 122 of shovel plate 126. When in the view as shown in Figure 12 drive 140 rotates in clockwise direction, stop 138 will move in clockwise direction from the position drawn in Figure 11, via a level lying higher than the upper surface of the products, from the front side of the products in the direction of the rear side of the products and come to rest in the position as shown in Figure 12. Because stop 138 holds back the products while shovel plate 126 moves away from under the products in the direction of the front side of the device, products 110 will be pulled against stop 138 and form a substantially straight surface on the front side of pallet 108. Figure 12 shows the situation in which a first row of products 110 is set down on pallet 108.

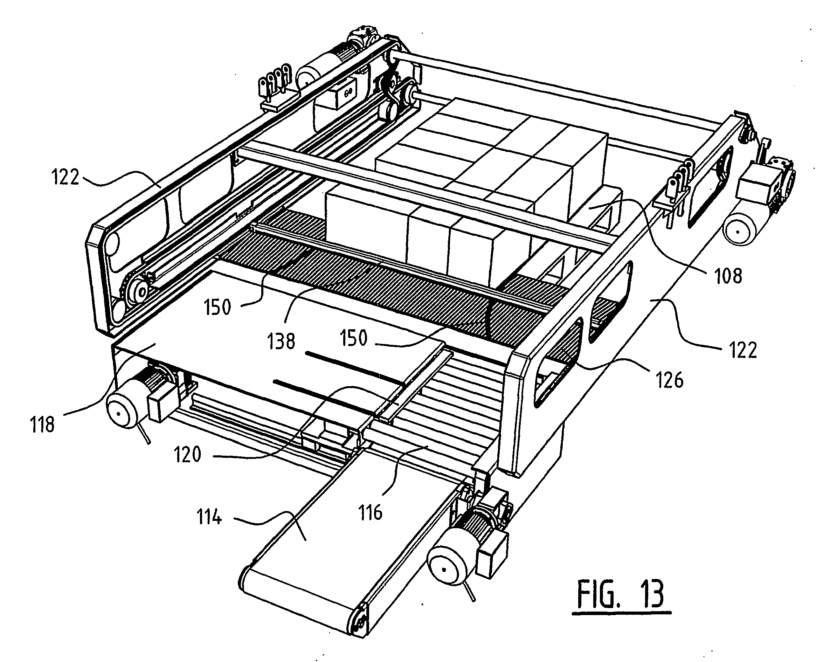

Figure 13 is a perspective view of the situation as shown in a top and side view in figure 2G. When a first row of products is set down on a pallet, stop 138 will be situated on the front side of the products, this step being shown in Figure 12. In order to set down further rows of products the stop 138 will be moved to the rear side of the products situated on shovel plate 126, whereafter shovel plate 126 is pulled out from under the products in the direction of the rear side, i.e. in the direction of the supply side, while stop 138 holds back the products. Because stop 138 holds back the products while shovel plate 126 moves away from under them, the products are pulled against stop 138 and a substantially straight surface of products will also form on the rear side of pallet 108. Possible spaces in a layer will in this way be arranged between the rows of products, while substantially straight surfaces are retained on the outer side of the loaded pallet, which provides a stable stacking when a pallet is loaded with multiple layers of products.

It is noted that the inventive concept is not limited to the above described sequence of setting down rows, wherein the foremost row is set down first. It is also possible to load the pallet in reverse sequence, wherein the rearmost row is set down first and further loading then takes place towards the front. In addition, it is also possible to first set down a row in the middle of the pallet and subsequently arrange further rows in the direction of the front and rear sides of the pallet, and in this way fill a whole layer. It is also noted that it is desirable for some stacking patterns to sometimes set down a single product instead of a row of products, which proceeds according to the same principle as described above.

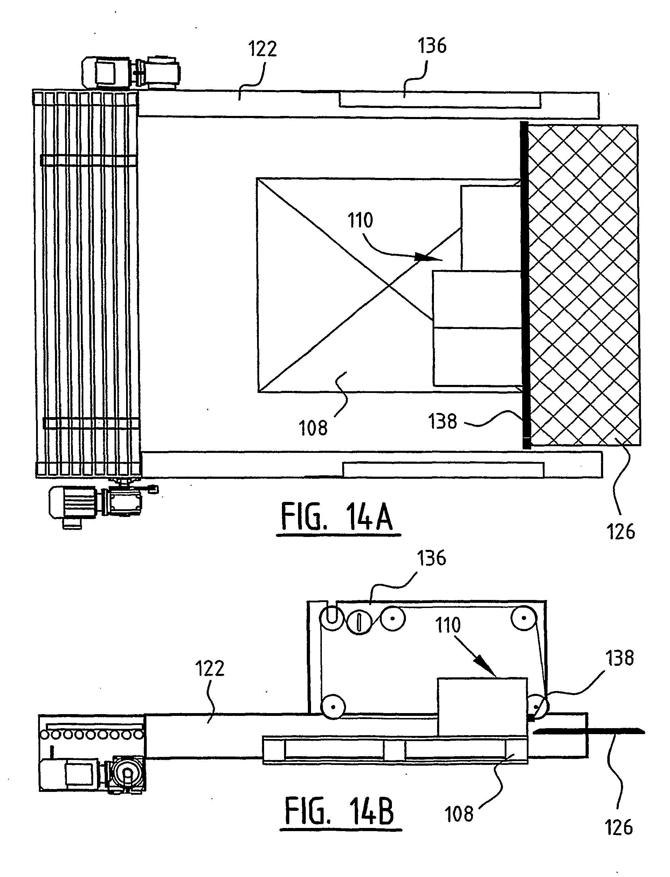

In a further preferred embodiment of the invention the frame 136 of stop 138 and frame 122 of shovel plate 126 are separate frames which are movable independently of each other. A top and side view of this embodiment is shown in Figures 14A and 14B, these corresponding with the situation as shown in Figure 3C. Because frame 136 of stop 138 is separate from frame 122 of shovel plate 126, stop 138 can be arranged in a shorter frame 136, thereby creating a more compact device. Frame 136 is preferably movable in order to be able to cover the total reach of frame 122. The skilled person will appreciate that it is also possible to only arrange frame 136 of stop 138 close to the set-down location and to provide a separate device for the purpose of pushing products from the supply side onto shovel plate 126.

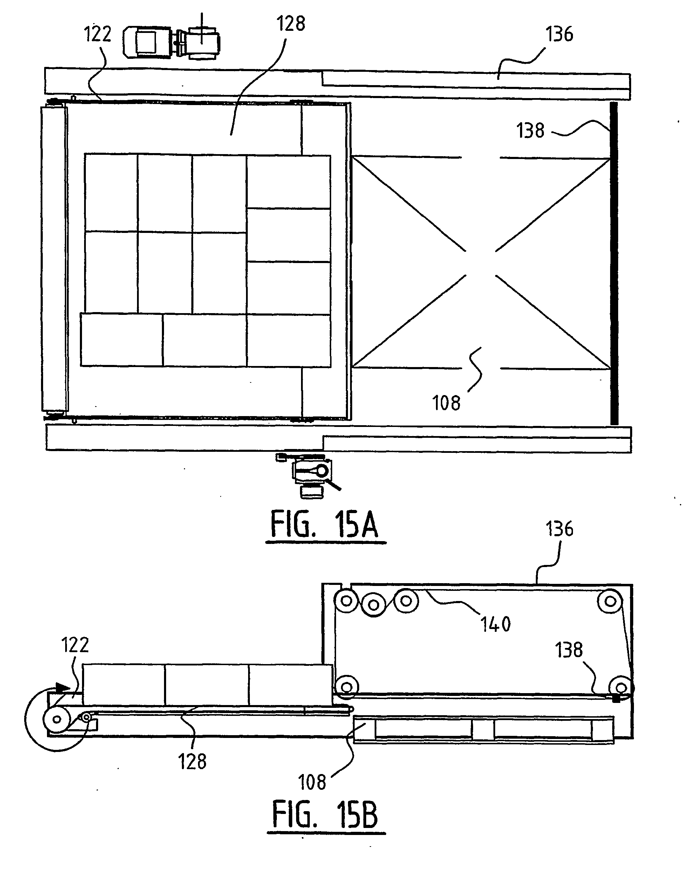

A further preferred embodiment of the invention is shown in Figures 15-17 where top and side views are shown of a device wherein the transport member is a belt shovel 128. This belt shovel 128 comprises a movable frame 132 (not shown) with a conveyor belt arranged thereon. Frame 132 (not shown) is movable together with the conveyor belt in longitudinal direction of device 102, and the conveyor belt can be driven in the same longitudinal direction. By individually or simultaneously displacing the frame and with optionally simultaneous driving of the conveyor belt arranged in this frame 132 a very flexible transport member is obtained, the operation of which will be further elucidated in the following example. A belt shovel moreover has a higher capacity than a shovel plate, since it can carry a whole layer at a time which can then be set down per number of rows, single row, or per product.

Figures 15A and 15B show respectively a top and side view of the situation corresponding to Figure 1A. The arrow in clockwise direction in Figure 15B indicates that the conveyor belt of belt shovel 128 rotates and in this manner pulls products from the supply side onto belt shovel 128. No stop 138 is required in this embodiment to push products onto the transport member, which is represented by belt shovel 128, whereby frame 136 of stop 138 need only extend in this embodiment substantially over the area of the set-down location, which is represented by the location where pallet 108 is situated.

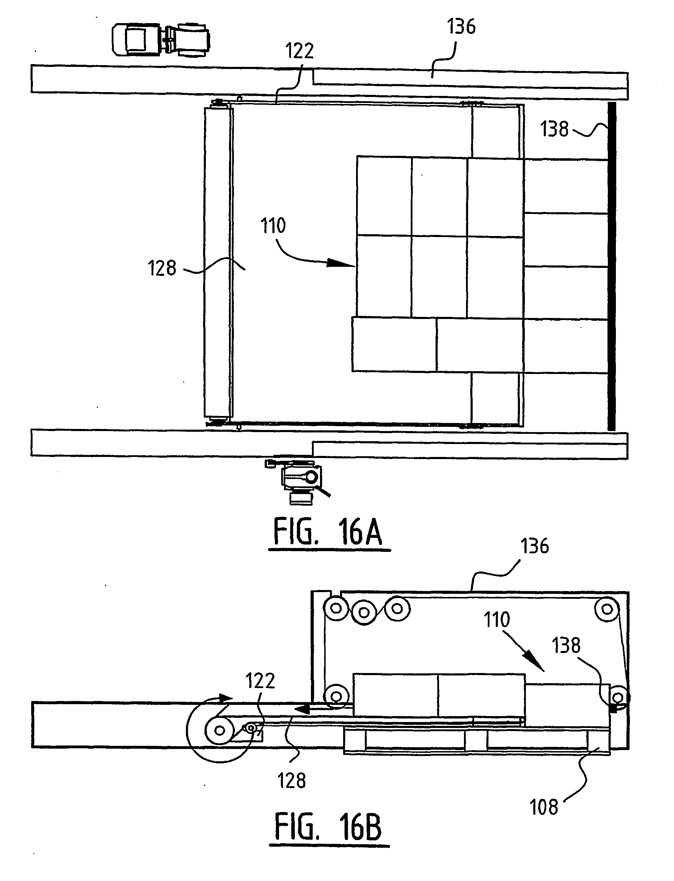

Figures 16A and 16B are respectively a top and side view of the situation shown in Figure 1D. In these figures can be seen how belt shovel 128 is displaced with its frame 122 to the discharge location. The discharge location is indicated with a pallet 108. Stop 138 is situated on the front side (discharge side) of the device in a position for holding back products 110 when these are set down by belt shovel 128. In the side view of Figure 16B are shown two arrows which indicate that frame 122 of belt shovel 128 is moving to the rear, i.e. in the direction of the supply location, and the surface of the conveyor belt of belt shovel 128 is simultaneously rotating in clockwise direction. When the speed at which frame 122 is pulled back and the rotation speed of the belt surface of belt shovel 128 are equal, the products still situated on belt shovel 128 will not be displaced relative to the device. It is possible in this way to set down further rows of products.

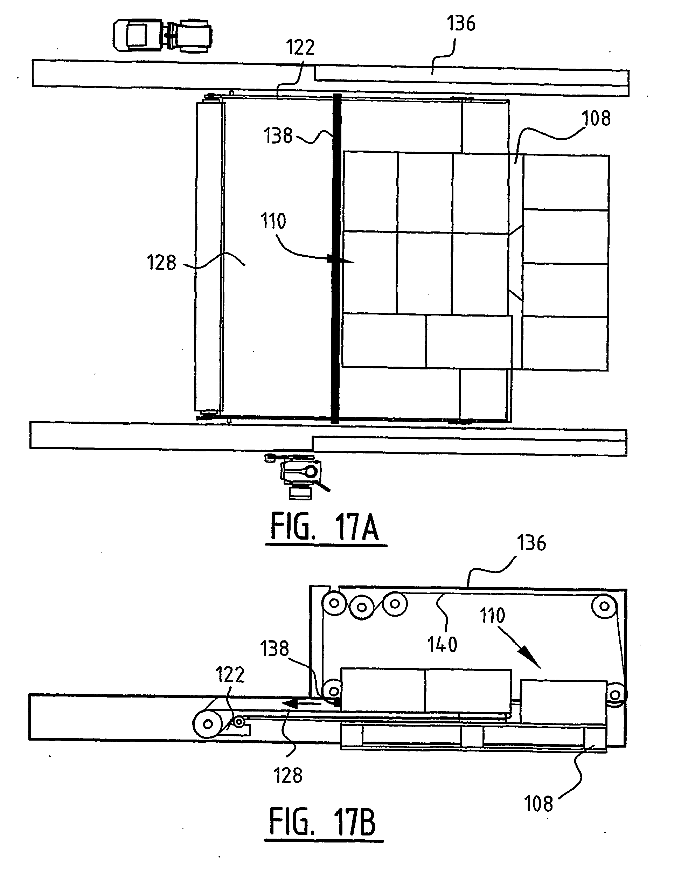

If it is desired to arrange a space between a row already set down and the following row of products to be set down, the belt shovel 128 can - as shown in Figures 17A and 17B - be displaced with its frame 122 in rearward direction, wherein the products still situated on belt shovel 128 are displaced relative to the device and the row of products already set down. Via its drive 140 arranged in frame 136 the stop 138 is carried over the top to the rear side of the products, where stop 138 holds back the products when belt shovel 128 is moved out from under the products in rearward direction. Because the products are pulled against stop 138, a substantially straight surface of products will form on the rear side of the pallet.

In the above described manner spaces can be arranged at any random location in a layer - between the rows - while retaining straight surfaces on the outer side of the loaded pallet. This provides a more stable stacking particularly when a pallet will be built up with multiple layers of products.

In a further preferred embodiment there is provided, as shown in Figure 10, a frame 142 for supporting a storage reservoir 144 for insert sheets or blanks 146. Frame 142 for supporting storage reservoir 144 for insert sheets 146 is arranged such that frame 122 of transport member 124 and frame 136 of stop 138 are movable in vertical direction via guide 106 of device 102 to a level higher than the level of storage reservoir 144 and insert sheets 146. It is noted that the location of frame 142 with the insert sheets or blanks 146 is not limited to the position shown in Figure 10 but can be situated anywhere within the reach of transport member 124.

Transport member 124, which in this embodiment comprises a shovel plate 126, is provided on its underside with suction cups 148. Although operation is explained on the basis of a shovel plate 126, it is also possible to envisage a belt shovel 128 being provided on its underside with such suction cups 148 via an additional frame. The belt shovel 128 provided with suction cups 148 moves with its frame 122 to a position above the level of frame 142 and the insert sheets 146 lying stored thereon. Shovel plate 126 is then moved in longitudinal direction in frame 122 to a position above the level of insert sheets 146, whereafter by lowering frame 136 the suction cups 148 situated on the underside of shovel plate 126 are brought into contact with the uppermost insert sheet 146. An insert sheet 146 is then engaged by creating vacuum in suction cups 148, whereafter frame 122 moves slightly upward, the shovel plate moves in longitudinal direction to a position above the set-down location, i.e. pallet 108, and frame 122 then descends so that shovel plate 126 can place insert sheet 146 on the topmost layer of products situated on pallet 108.

Because shovel plate 126 is provided on its underside with suction cups 148, shovel plate 126 can be moved to the supply location to take up new products immediately after placing of insert sheet 146 on the topmost layer of products on pallet 108. Thus is prevented that shovel plate 126, after placing an insert sheet 146, would first have to be moved back to the storage reservoir 144 for insert sheets, which is the case when use is made of a separate frame (not shown) provided with suction cups 148 which first has to be collected and then returned by shovel plate 126. A movement between the set-down location and storage reservoir 144 can therefore be saved by providing the shovel plate 126 itself with such suction cups 148.

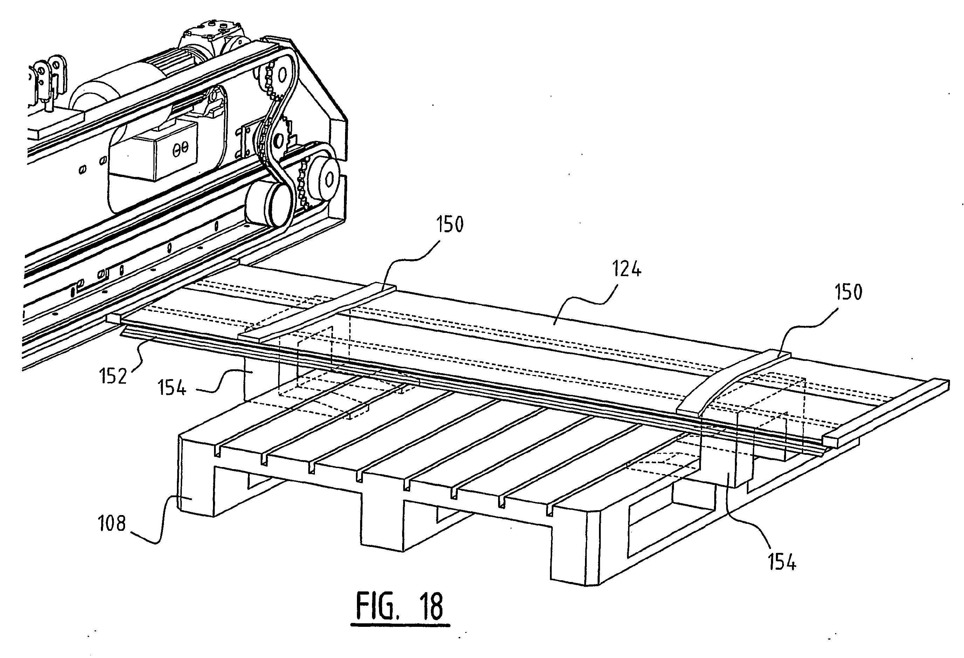

In a further preferred embodiment product guides 150 are arranged on transport member 124. When the transport member is a shovel plate 126, these product guides 150 are arranged on the surface of shovel plate 126 and for instance comprise two tapering strips (see Figures 13 and 18). When the products are pushed by these tapering strips the individual products are moved against each other in transverse direction. Possible spaces in transverse direction are hereby eliminated and the products will be set down from shovel plate 126 onto pallet 108 in a substantially continuous row.

In the situation where transport member 124 is a belt shovel 128, a member supporting such product guides can optionally be arranged extending over the surface of the conveyor belt from the frame of the belt shovel. In the embodiment of the belt shovel 128 the products will be pulled by the product guides when the belt of the belt shovel is driven in forward direction.

Figure 18 shows a shovel plate 128 provided with grippers 154 for picking up a pallet 108. Shovel plate 126 is placed above a stack of pallets within its reach, whereafter grippers 154, consisting for instance of forks driven by hydraulic cylinders (not shown) and arranged on the side of the shovel plate, engage the pallet. Shovel plate 126 is then displaced in order to position the pallet to be loaded at the desired location. Because each pallet is set down individually by the device and forms a set-down location, the set-down location can be precisely chosen and influenced by positioning a pallet, thereby creating a flexible system. In a preferred embodiment the positioning control takes a self-learning form. It is noted that the location of the pallets - the as yet unloaded pallets as well as the pallet to be loaded - can be situated anywhere within the reach of shovel plate 126, and that shovel plate 126 can also be a belt shovel 128.

In a further preferred embodiment the frame 142 shown in Figure 10 for supporting a storage reservoir 144 of insert sheets or blanks 146 is replaced by a frame (not shown) for carrying a roll of material (not shown), such as for instance a roll of foil or paper, this material being arranged between and on the layers of pallet 108. When insert sheets or blanks 146 are picked up it may sometimes occur that when the uppermost insert sheet or blank 146 is picked up an insert sheet or blank 146 lying thereunder is also taken up. The use of material on a roll does not have this problem. Figure 18 shows an embodiment of a shovel plate 126 wherein shovel plate 126 is provided on the side directed toward the roll (not shown) with a gripper 152 for engaging the material situated on the roll. By displacing shovel plate 126 the desired amount of material is drawn off the roll and severed from the roll by cutting means (not shown). Shovel plate 126 can then hold the piece of material cut to size with gripper 152 and lower it onto the set-down location, i.e. pallet 108. It is noted that the location of the roll - just as frame 142 with the insert sheets or blanks 146 in Figure 10 - is not limited to the shown position, but can be situated anywhere within the reach of transport member 124, here shovel plate 126. It is further noted that gripper 152 can also comprise a plurality of grippers arranged over the width of shovel plate 126.

The above described embodiments, although showing preferred embodiments of the invention, are intended solely for the purpose of illustrating the present invention and do not in any way limit the scope of the invention. It will thus be apparent to the skilled person that an embodiment with a belt shovel and a stop arranged in a separately movable frame also represents a device in accordance with the inventive concept of this patent. The scope of the invention is therefore defined solely by the following claims.

## Claims

1. Method for transferring one or more products from a supply location to a set-down location, comprising the steps of:
- moving a transport member (124) between the supply location and the set-down location, wherein one or more products (52) are situated on the transport member;
- moving a stop (4, 31, 138) to a level higher than the transport member (124) and lower than an upper surface of the products (52) situated on the transport member (124);
- setting down the products (52) at the set-down location by moving the transport member (124) and the stop (4, 31, 138) relative to each other, wherein the stop holds back the products while the transport member moves away from under the products, wherein the transport member (124) comprises a belt shovel (2, 30, 128), and the method further comprises the steps of:
- transporting a layer (1) of products onto the belt shovel (2, 30, 128);
- transporting the belt shovel (2, 30, 128) with the layer (1) thereon forward;
- causing the belt of the belt shovel (2, 30, 128) to rotate in forward direction, thereby moving the layer against the stop (4, 31, 138) to create a straight surface of products on the front side of the layer;
- moving the belt shovel (2, 30, 128) rearward while the belt rotates in forward direction as the whole belt shovel (2, 30, 128) is pulled back, thereby remaining the layer (1) being pressed against stop (4, 31, 138) and setting down the foremost row (5) of products on the set-down location;
- stopping the belt shovel (2, 30, 128) from rotating and remaining the belt shovel (2, 30, 128) in its position;
- carrying the stop (4, 31, 138) rearward;
- transporting the belt shovel (2, 30, 128), without rotating, to the rear until the rearmost row (7) of the layer of products contacts the stop (4, 31, 138) to create a straight surface of products at the rear side of the layer; and
- transporting the belt shovel (2, 30, 128) further to the rear, still without rotating the belt itself, until the remainder of the products is set down on the set-down location.

2. Method for transferring one or more products from a supply location to a set-down location, comprising the steps of:
- moving a transport member (124) between the supply location and the set-down location, wherein one or more products (52) are situated on the transport member;
- moving a stop (11, 21, 46, 138) to a level higher than the transport member (124) and lower than an upper surface of the products (52) situated on the transport member (124);
- setting down the products (52) at the set-down location by moving the transport member (124) and the stop (11, 21, 46, 138) relative to each other, wherein the stop holds back the products while the transport member moves away from under the products, wherein the transport member (124) comprises a shovel plate (13, 23, 49, 126), and the method further comprises the steps of:
a) transporting a row (10, 20) of products onto the shovel plate (13, 23, 49, 126) by means of the stop (11, 21, 46, 138) pushing the row (10, 20) onto the shovel plate (13, 23, 49, 126), thereby creating a straight surface of products on the rear side of the row (10, 20);
b) moving the shovel plate (13, 23, 49, 126) with the row (10, 20) forward;
c) carrying the stop (11, 21, 46, 138) into a position on the front side of the set-down location, whereby it functions as a front stop;
d) moving the shovel plate (13, 23, 49, 126) further forward en setting down a row (10 20) of products at the set-down location, the stop (11, 21, 46, 138) creating a straight surface of products on the front side;
e) descending the set-down location or moving the shovel plate (13, 23, 49, 126) upward;
f) returning the shovel plate (13, 23, 49, 126) and the stop (11, 21) to their starting position;
g) moving the set-down location upward or moving the shovel plate (13, 23, 49, 126) downward;
h) repeating step a)
i) moving the shovel plate (13, 23, 49, 126) with the row (16, 26) of products thereon forward to a position just behind the previously set down row; and
j) also moving forward the stop (11, 21, 46, 138) to a position just behind the position where the row (16, 26) must be positioned;
k) moving the shovel plate (13, 23, 49, 126) to the rear whereby the row (16, 26) of products are pulled against stop (11, 21, 46, 138) to create a straight surface of products on the rear side of the row; and
l) moving the shovel plate (13, 23, 49, 126) further to the rear and setting down the row of products on the set-down location.

3. Method according to claim 1 or 2, wherein the stop comprises a flight bar and/or the set-down location comprises a pallet (6, 15, 24).

4. Method as claimed in any of the previous claims, wherein one or more products are pushed onto the transport member (124) by the stop (4, 11, 21, 31, 46, 138) due to the relative movement of the stop and the transport member (124).

5. Method as claimed in any of the previous claims, wherein the products (52) are set down per row at the set-down location.

6. Device for transferring one or more products from a supply location to a set-down location, comprising:
- a transport member (124) which is movable between the supply location and the set-down location and on which the products (52) are displaceable; and
- means which cause the products (52) and the transport member (124) to move relative to each other, said means comprising a stop (4, 31, 138) which is arranged at a higher level than the transport member (124);
- wherein said stop is movable between a first level, which is substantially higher than a level of an upper surface of the products (52), and a second level which is substantially higher than the level of the transport member (124) but lower than the level of the upper surface of the products (52),
**characterized in that** the transport member (124) comprises a belt shovel (2, 30, 128) and **in that** the device comprises means to control the movements of the stop and the belt shovel for transferring the products according to the method of claim 1.

7. Device for transferring one or more products from a supply location to a set-down location, comprising:
- a transport member (124) which is movable between the supply location and the set-down location and on which the products (52) are displaceable; and
- means which cause the products (52) and the transport member (124) to move relative to each other, said means comprising a stop (11, 21, 46, 138) which is arranged at a higher level than the transport member (124);
- wherein said stop is movable between a first level, which is substantially higher than a level of an upper surface of the products (52), and a second level which is substantially higher than the level of the transport member (124) but lower than the level of the upper surface of the products (52),
**characterized in that** the transport member (124) comprises a shovel plate (13, 23, 49,126) and **in that** the device comprises means to control the movements of the stop and shovel plate for transferring the products according to the method of claim 2.

8. Device as claimed in claim 6 or 7, wherein the stop (4, 11, 21, 31, 46, 138) is substantially a bar.

9. Device as claimed in any of claims 6-8, wherein the stop (4, 11, 21, 31, 46, 138) is movable in a peripheral path in a substantially vertical plane via a guide.

10. Device as claimed in any of claims 6-9, wherein the transport member (124) and the stop (4, 11, 21, 31, 46, 138) are arranged in a frame (122) for movement relative to each other.

11. Device as claimed in any of claims 6-10, wherein the transport member (124) and the stop (4, 11, 21, 31, 46, 138) are arranged in frames (122, 136) which are individually movable relative to each other.

12. Device as claimed in any of claims 6-11, wherein the transport member (124) is provided on its underside with holding means (148) for picking up an insert sheet (146) from a storage reservoir (144).

13. Device as claimed in claim 12, wherein the holding means (148) comprise vacuum means.

## Patentansprüche

1. Verfahren zum Transferieren eines oder mehrerer Produkte vom einem Bereitstellungsort zu einem Absetzort, das folgende Schritte umfasst:
- Bewegen einer Transportvorrichtung (124) zwischen dem Bereitstellungsort und dem Absetzort, wobei ein oder mehrere Produkte (52) sich auf der Transportvorrichtung befinden;
- Bewegen eines Anschlags (4, 31, 138) nach ein Niveau höher als die Transportvorrichtung (124) und niedriger als eine obere Oberfläche der Produkte (52), die sich auf der Transportvorrichtung (124) befinden;
- Absetzen der Produkte (52) am Absetzort durch Bewegen der Transportvorrichtung (124) und des Anschlags (4, 31,138) relativ zueinander, wobei der Anschlag (4, 31, 138) die Produkte zurückhält, während die Transportvorrichtung sich unter den Produkten fortbewegt, wobei die Transportvorrichtung (124) eine Förderbandeinheit (2, 30, 128) umfasst, und das Verfahren weiter die Schritte umfasst:
- Transportieren einer Lage (1) von Produkten auf die Förderbandeinheit (2, 30, 128) hinauf;
- Transportieren der Förderbandeinheit (2, 30, 128) mit der Lage (1) darauf vorwärts;
- Band der Förderbandeinheit (2, 30, 128) veranlassen in Vorwärts-Richtung zu rotieren, dabei bewegt sich die Lage gegen den Anschlag (4, 31,138), um eine gerade Oberfläche an Produkten an der vorderen Seite der Lage zu erzeugen;
- Rückwärtsbewegen der Förderbandeinheit (2, 30, 128), während das Band in Vorwärts-Richtung rotiert, während die ganze Förderbandeinheit (2, 30, 128) zurückgezogen wird, dabei bleibt die Lage (1) gegen den Anschlag (4, 31,138) gedrückt, und Absetzen der vordersten Reihe (5) von Produkten am Absetzort;
- Anhalten der Förderbandeinheit (2, 30, 128) zu rotieren und Verbleiben der Förderbandeinheit (2,30,128) in ihrer Position;
- Befördern des Anschlags (4, 31, 138) nach hinten;
- Transportieren der Förderbandeinheit (2, 30, 128) ohne zu rotieren nach hinten bis die hinterste Reihe (7) von der Lage von Produkten den Anschlag (4, 31, 138) berührt, um eine gerade Oberfläche von Produkten an der hinteren Seite der Lage zu erzeugen; und
- Transportieren der Förderbandeinheit (2, 30, 128) weiter nach hinten, weiterhin ohne Rotieren des Bandes selbst, bis der Rest an Produkten am Absetzort abgesetzt ist.

2. Verfahren zum Transferieren eines oder mehrerer Produkte von einem Bereitstellungsort zu einem Absetzort, das folgende Schritte umfasst:
- Bewegen einer Transportvorrichtung (124) zwischen dem Bereitstellungsort und dem Absetzort, wobei ein oder mehrere Produkte (52) sich auf der Transportvorrichtung befinden;
- Bewegen eines Anschlags (11, 21, 46, 138) nach ein Niveau höher als die Transportvorrichtung (124) und niedriger als die obere Oberfläche der Produkte (52), die sich auf der Transportvorrichtung (124) befinden;
- Absetzen der Produkte (52) am Absetzort durch Bewegen der Transportvorrichtung (124) und des Anschlags (11, 21, 46, 138) relativ zueinander, wobei der Anschlag die Produkte zurückhält, während die Transportvorrichtung sich unter den Produkten fortbewegt, wobei die Transportvorrichtung (124) eine Beförderungsplatte (13, 23, 49, 126) umfasst, und das Verfahren folgende Schritte umfasst:
a) Transportieren einer Reihe (10, 20) von Produkten auf die Beförderungsplatte (13, 23, 49, 126) hinauf mittels des Anschlags (11, 21, 46, 138), der die Reihe (10, 20) auf die Beförderungsplatte (13, 23, 49, 126) hinauf schiebt, dabei Erzeugen einer geraden Oberfläche von Produkten an der hinteren Seite der Reihe (10, 20);
b) Bewegen der Beförderungsplatte (13, 23, 49, 126) mit der Reihe (10, 20) vorwärts;
c) Befördern des Anschlags (11, 21, 46, 138) in eine Position an der Vorderseite des Absetzortes, wobei dieser als vorderer Anschlag fungiert;
d) Bewegen der Beförderungsplatte (13, 23, 49, 126) weiter vorwärts und Absetzen einer Reihe (10, 20) von Produkten am Absetzort, der Anschlag (11, 21, 46, 138) schafft eine gerade Oberfläche von Produkten an der vorderen Seite;
e) Absenken des Absetzortes oder Hochbewegen der Beförderungsplatte (13, 23, 49, 126);
f) Rückführen der Beförderungsplatte (13, 23, 49, 126) und des Anschlags (11, 21) in ihre Startposition;
g) Hochbewegen des Absetzortes oder Absenken der Beförderungsplatte (13, 23, 49, 126);
h) Wiederholen von Schritt a)
i) Vorwärtsbewegen der Beförderungsplatte (13, 23, 49, 126) mit der Reihe (16, 26) von Produkten darauf in eine Position gerade hinter der davor abgesetzten Reihe; und
j) auch Vorwärtsbewegen des Anschlags (11, 21, 46, 138) in eine Position gerade hinter der Position, wo die Reihe (16, 26) positioniert werden soll;
k) Bewegen der Beförderungsplatte (13, 23, 49, 126) nach hinten, wobei die Reihe (16, 26) von Produkten gegen den Anschlag (11, 21, 46, 138) gezogen wird, um eine gerade Oberfläche von Produkten an der hinteren Seite der Lage zu erzeugen; und
l) Weiterbewegen der Beförderungsplatte (13, 23, 49, 126) nach hinten und Absetzen der Reihe von Produkten am Absetzort.

3. Verfahren gemäß Anspruch 1 und 2, wobei der Anschlag einen Flugstab umfasst und/oder der Absetzort eine Palette (6, 15, 24) umfasst.

4. Verfahren nach einem der vorherigen Ansprüche, wobei ein oder mehrere Produkte durch den Anschlag (4, 11 21, 31, 46, 138) auf die Transportvorrichtung (124) geschoben werden, bedingt durch die Relativbewegung zwischen dem Anschlag und der Transportvorrichtung (124).

5. Verfahren nach einem der vorherigen Ansprüche, wobei die Produkte (52) per Reihe am Absetzort abgesetzt werden.

6. Vorrichtung zum Transferieren eines oder mehrerer Produkte von einem Bereitstellungsort zu einem Absetzort, umfassend:
- eine Transportvorrichtung (124), die zwischen dem Bereitstellungsort und dem Absetzort beweglich ist und auf der die Produkte (52) verschiebbar sind; und
- Hilfsmittel , die bewirken, dass die Produkte (52) und die Transportvorrichtung (124) sich relativ zueinander bewegen, genannte Hilfsmittel umfassen einen Anschlag (4, 31, 138), der ein Niveau höher als die Transportvorrichtung (124) angeordnet ist;
- worin genannter Anschlag beweglich ist zwischen einem ersten Niveau, das wesentlich höher ist als ein Niveau einer oberen Oberfläche der Produkte (52), und einem zweiten Niveau, das wesentlich höher ist als das Niveau der Transportvorrichtung (124), aber niedriger als das Niveau der oberen Oberfläche der Produkte (52) ist,
**dadurch gekennzeichnet, dass** die Transportvorrichtung (124) eine Förderbandeinheit (2, 30, 128) umfasst und dadurch dass die Vorrichtung Hilfsmittel zum Kontrollieren der Bewegungen des Anschlags und der Förderbandeinheit umfasst, um die Produkte gemäß dem Verfahren nach Anspruch 1 zu transferieren.

7. Vorrichtung zum Transferieren eines oder mehrerer Produkte von einem Bereitstellungsort zu einem Absetzort, umfassend:
- eine Transportvorrichtung (124), die zwischen dem Bereitstellungsort und dem Absetzort beweglich ist und auf der die Produkte (52) verschiebbar sind; und
- Hilfsmittel , die bewirken, dass die Produkte (52) und die Transportvorrichtung (124) sich relativ zueinander bewegen, genannte Hilfsmittel umfassen einen Anschlag (11, 21, 46, 138), der ein Niveau höher als die Transportvorrichtung (124) angeordnet ist;
- wobei genannter Anschlag beweglich ist zwischen einem ersten Niveau, das wesentlich höher ist als ein Niveau einer oberen Oberfläche der Produkte (52), und einem zweiten Niveau, das wesentlich höher ist als das Niveau der Transportvorrichtung (124), aber niedriger als das Niveau der oberen Oberfläche der Produkte (52) ist,
**dadurch gekennzeichnet, dass** die Transportvorrichtung (124) eine Beförderungsplatte (13, 23, 49, 126) umfasst und dadurch dass die Vorrichtung Hilfsmittel zum Kontrollieren der Bewegungen des Anschlags und der Beförderungsplatte umfasst, um die Produkte gemäß dem Verfahren aus Anspruch 2 zu transferieren.

8. Vorrichtung gemäß Anspruch 6 oder 7, wobei der Anschlag (4, 11, 21, 31, 46, 138) im Wesentlichen ein Stab ist.

9. Vorrichtung gemäß Ansprüchen 6-8, wobei der Anschlag (4, 11, 21, 31, 46, 138) im Wesentlichen in einer vertikalen Ebene über eine Führung am seitlichen Rand beweglich ist.

10. Vorrichtung gemäß Ansprüchen 6-9, wobei die Transportvorrichtung (124) und der Anschlag (4, 11, 21, 31, 46, 138) für Relativbewegung zueinander in einem Rahmen (122) angeordnet sind.

11. Vorrichtung gemäß Ansprüchen 6-10, wobei die Transportvorrichtung (124) und der Anschlag (4, 11, 21, 31, 46, 138) in Rahmen (122, 136) angeordnet sind, die relativ zueinander einzeln beweglich sind.

12. Vorrichtung gemäß Ansprüchen 6-11, wobei die Transportvorrichtung (124) an der Unterseite mit Haltemitteln (148) zum Aufnehmen eines Einlegeblattes (146) aus einem Vorratsbehälter (144) ausgestattet ist.

13. Vorrichtung gemäß Anspruch 12, wobei die Haltemittel (148) Vakuummittel umfassen.

## Revendications

1. Procédé pour transférer un ou plusieurs produits d'un emplacement d'approvisionnement à un emplacement de dépôt, comprenant les étapes consistant à :
déplacer un élément de transport (124) entre l'emplacement d'approvisionnement et l'emplacement de dépôt, dans lequel un ou plusieurs produits (52) sont situés sur l'élément de transport ;
déplacer une butée (4, 31, 138) jusqu'à un niveau supérieur à l'élément de transport (124) et inférieur à une surface supérieure des produits (52) situés sur l'élément de transport (124) ;
déposer les produits (52) à l'emplacement de dépôt en déplaçant l'élément de transport (124) et la butée (4, 31, 138) l'un par rapport à l'autre, dans lequel la butée retient les produits alors que l'élément de transport s'éloigne sous les produits, dans lequel l'élément de transport (124) comprend une pelle à courroie (2, 30, 128) et le procédé comprend en outre les étapes consistant à :
transporter une couche (1) de produits sur la pelle à courroie (2, 30, 128) ;
transporter la pelle à courroie (2, 30, 128) avec la couche (1) sur cette dernière, vers l'avant ;
amener la courroie de la pelle à courroie (2, 30, 128) à tourner dans la direction vers l'avant, déplaçant ainsi la couche contre la butée (4, 31, 138) afin de créer une surface droite de produits sur le côté avant de la couche ;
déplacer la pelle à courroie (2, 30, 128) vers l'arrière alors que la courroie tourne dans la direction vers l'avant lorsque toute la pelle à courroie (2, 30, 128) est tirée vers l'arrière, laissant ainsi la couche (1) qui est comprimée contre la butée (4, 31, 138) et déposant la rangée située le plus vers l'avant (5) de produits sur l'emplacement de dépôt ;
arrêter la rotation de la pelle à courroie (2, 30, 128) et laisser la pelle à courroie (2, 30, 128) dans sa position ;
transporter la butée (4, 31, 138) vers l'arrière ;
transporter la pelle à courroie (2, 30, 128) sans tourner, jusqu'à l'arrière jusqu'à ce que la rangée située le plus en arrière (7) de la couche de produits soit en contact avec la butée (4, 31, 138) afin de créer une surface droite de produits du côté arrière de la couche ; et
transporter la pelle à courroie (2, 30, 128) davantage vers l'arrière, sans faire tourner la courroie elle-même, jusqu'à ce que le reste des produits soit déposé à l'emplacement de dépôt.

2. Procédé pour transférer un ou plusieurs produits d'un emplacement d'approvisionnement jusqu'à un emplacement de dépôt, comprenant les étapes consistant à :
déplacer un élément de transport (124) entre l'emplacement d'approvisionnement et l'emplacement de dépôt, dans lequel un ou plusieurs produits (52) sont situés sur l'élément de transport ;
déplacer une butée (11, 21, 46, 138) jusqu'à un niveau supérieur à l'élément de transport (124) et inférieur à une surface supérieure des produits (52) situés sur l'élément de transport (124) ;
déposer les produits (52) à l'emplacement de dépôt en déplaçant l'élément de transport (124) et la butée (11, 21, 46, 138) l'un par rapport à l'autre, dans lequel la butée retient les produits alors que l'élément de transport s'éloigne sous les produits, dans lequel l'élément de transport (124) comprend une plaque formant pelle (13, 23, 49, 126) et le procédé comprend en outre les étapes consistant à :
a) transporter une rangée (10, 20) de produits sur la plaque formant pelle (13, 23, 49, 126) au moyen de la butée (11, 21, 46, 138) qui pousse la rangée (10, 20) sur la plaque formant pelle (13, 23, 49, 126), créant ainsi une surface droite de produits sur le côté arrière de la rangée (10, 20) ;
b) déplacer la plaque formant pelle (13, 23, 49, 126) avec la rangée (10, 20) vers l'avant ;
c) transporter la butée (11, 21, 46, 138) dans une position sur le côté avant de l'emplacement de dépôt, moyennant quoi elle fonctionne comme une butée avant ;
d) déplacer la plaque formant pelle (13, 23, 49, 126) davantage vers l'avant en déposant une rangée (10, 20) de produits à l'emplacement de dépôt, la butée (11, 21, 46, 138) créant une surface droite de produits sur le côté avant ;
e) faire descendre l'emplacement de dépôt ou déplacer la plaque formant pelle (13, 23, 49, 126) vers le haut ;
f) faire revenir la plaque formant pelle (13, 23, 49, 126) et la butée (11, 21) dans leur position de départ ;
g) déplacer l'emplacement de dépôt vers le haut ou déplacer la plaque formant pelle (13, 23, 49, 126) vers le bas ;
h) répéter l'étape a) ;
i) déplacer la plaque formant pelle (13, 23, 49, 126) avec la rangée (16, 26) de produits sur cette dernière vers l'avant jusqu'à une position juste derrière la rangée précédemment déposée ; et
j) déplacer également vers l'avant la butée (11, 21, 46, 138) jusqu'à une position située juste derrière la position où la rangée (16, 26) doit être positionnée ;
k) déplacer la plaque formant pelle (13, 23, 49, 126) vers l'arrière, moyennant quoi la rangée (16, 26) de produits est tirée contre la butée (11, 21, 46, 138) pour créer une surface droite de produits sur le côté arrière de la rangée ; et
l) déplacer la plaque formant pelle (13, 23, 49, 126) davantage vers l'arrière et déposer la rangée de produits à l'emplacement de dépôt.

3. Procédé selon la revendication 1 ou 2, dans lequel la butée comprend une barre d'anode et/ou l'emplacement de dépôt comprend une palette (6, 15, 24).

4. Procédé selon l'une quelconque des revendications précédentes, dans lequel un ou plusieurs produits sont poussés sur l'élément de transport (124) par la butée (4, 11, 21, 31, 46, 138) en raison du mouvement relatif de la butée et de l'élément de transport (124).

5. Procédé selon l'une quelconque des revendications précédentes, dans lequel les produits (52) sont déposés par rangée à l'emplacement de dépôt.

6. Dispositif pour transférer un ou plusieurs produits d'un emplacement d'approvisionnement à un emplacement de dépôt, comprenant :
l'élément de transport (124) qui est mobile entre l'emplacement d'approvisionnement et l'emplacement de dépôt et sur lequel les produits (52) peuvent être déplacés ; et
des moyens qui amènent les produits (52) et l'élément de transport (124) à se déplacer les uns par rapport aux autres, lesdits moyens comprenant une butée (4, 31, 138) qui est agencée à un niveau supérieur à l'élément de transport (124) ;
dans lequel ladite butée est mobile entre un premier niveau qui est sensiblement plus élevé qu'un niveau d'une surface supérieure des produits (52), et un deuxième niveau qui est sensiblement plus élevé que le niveau de l'élément de transport (124) mais plus bas que le niveau de la surface supérieure des produits (52),
**caractérisé en ce que** l'élément de transport (124) comprend une pelle à courroie (2, 30, 128) et **en ce que** le dispositif comprend des moyens pour contrôler les mouvements de la butée et de la pelle à courroie pour transférer les produits selon le procédé de la revendication 1.

7. Dispositif pour transférer un ou plusieurs produits à partir d'un emplacement d'approvisionnement jusqu'à un emplacement de dépôt, comprenant :
un élément de transport (124) qui est mobile entre l'emplacement d'approvisionnement et l'emplacement de dépôt et sur lequel les produits (52) peuvent être déplacés ; et
des moyens qui amènent les produits (52) et l'élément de transport (124) à se déplacer les uns par rapport aux autres, lesdits moyens comprenant une butée (11, 21, 46, 138) qui est agencée à un niveau plus élevé que l'élément de transport (124) ;
dans lequel ladite butée est mobile entre un premier niveau qui est sensiblement plus haut qu'un niveau d'une surface supérieure des produits (52), et un deuxième niveau qui est sensiblement plus élevé que le niveau de l'élément de transport (124) mais plus bas que le niveau de la surface supérieure des produits (52) ;
**caractérisé en ce que** l'élément de transport (124) comprend une plaque formant pelle (13, 23, 49, 126) et **en ce que** le dispositif comprend des moyens pour contrôler les mouvements de la butée et de la plaque formant pelle pour transférer les produits selon le procédé de la revendication 2.

8. Dispositif selon la revendication 6 ou 7, dans lequel la butée (4, 11, 21, 31, 46, 138) est sensiblement une barre.

9. Dispositif selon l'une quelconque des revendications 6 à 8, dans lequel la butée (4, 11, 21, 31, 46, 138) est mobile dans une trajectoire périphérique dans un plan sensiblement vertical via un guide.

10. Dispositif selon l'une quelconque des revendications 6 à 9, dans lequel l'élément de transport (124) et la butée (4, 11, 21, 31, 46, 138) sont agencés dans un châssis (122) pour le mouvement l'un par rapport à l'autre.

11. Dispositif selon l'une quelconque des revendications 6 à 10, dans lequel l'élément de transport (124) et la butée (4, 11, 21, 31, 46, 138) sont agencés dans des châssis (122, 136) qui sont individuellement mobiles l'un par rapport à l'autre.

12. Dispositif selon l'une quelconque des revendications 6 à 11, dans lequel l'élément de transport (124) est prévu sur sa face inférieure avec des moyens de maintien (148) pour prendre une feuille d'insert (146) d'un réservoir de stockage (144).

13. Dispositif selon la revendication 12, dans lequel les moyens de maintien (148) comprennent des moyens de vide.
